# EUROPEAN PATENT APPLICATION

(11) **EP 4 277 173 A1**
(43) Date of publication of application: **15.11.2023**
(21) Application number: 21918286.2
(22) Date of filing: 13.01.2021

(54) **NODE DETERMINATION METHOD AND APPARATUS OF DISTRIBUTED TASK, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Ipside
(86) International application number: PCT/CN2021/071550
(87) International publication number: WO 2022/151071

(57) **Abstract**

The disclosure discloses a method for node determination for a distributed task, an apparatus for node determination for a distributed task, a device, and a medium, and relates to the field of mobile communication. The method includes the following. The child node receives first information transmitted by a master node, where the first information indicates a capability requirement for a valid child node participating in the distributed task. The child node transmits second information to the master node based on the first information and capability information of the child node, where the second information is used to request to become the valid child node participating in the distributed task. The master node determines a child node participating in the distributed task based on the second information of multiple child nodes. The master node transmits third information to the child node, where the third information indicates that the master node agrees for the child node to become the valid child node participating in the distributed task.

## Description

### TECHNICAL FIELD

The disclosure relates to the field of mobile communication, and more particularly, to a method for node determination for a distributed task, an apparatus for node determination for a distributed task, a device, and a medium.

### BACKGROUND

Early researches on neural networks are mostly built on the assumption of single-machine training and inference. In recent years, researchers have gradually shifted their focus towards distributed tasks.

The training process of the distributed task involves multiple nodes participating in the training of the model, including collection of data sets, adjustment of weights, etc.

In the process of the distributed task, how to determine a node participating in the distributed task is a technical problem to be solved.

### SUMMARY

Implementations of the disclosure provide a method for node determination for a distributed task, an apparatus for node determination for a distributed task, a device, and a medium, with which a master node can determine a node participating in a distributed task from multiple child nodes based on available resource information.

According to an aspect of the disclosure, a method for node determination for a distributed task is provided. The method is applied to a child node among multiple nodes in a mobile communication network and includes the following. The child node receives first information transmitted by a master node, where the first information indicates a capability requirement for a node participating in the distributed task. The child node transmits second information to the master node based on the first information and capability information of the child node, where the second information is used to request to become a valid child node participating in the distributed task.

According to an aspect of the disclosure, a method for node selection for a distributed task is provided. The method is applied to a master node among multiple nodes in a mobile communication network and includes the following. The master node transmits first information to a child node in the mobile communication network, where the first information indicates a capability requirement for a node participating in the distributed task. The master node receives second information transmitted by the child node, where the second information is used to request to become a valid child node participating in the distributed task.

According to an aspect of the disclosure, an apparatus for node determination for a distributed task is provided. The apparatus includes a receiving module and a transmitting module. The receiving module is configured to receive first information transmitted by a master node, where the first information indicates a capability requirement for a node participating in the distributed task. The transmitting module is configured to transmit second information to the master node based on the first information and capability information of the child node, where the second information is used to request to become a valid child node participating in the distributed task.

According to an aspect of the disclosure, an apparatus for node determination for a distributed task is provided. The apparatus includes a transmitting module and a receiving module. The transmitting module is configured to transmit first information to a child node in a mobile communication network, where the first information indicates a capability requirement for a node participating in the distributed task. The receiving module is configured to receive second information transmitted by the child node, where the second information is used to request to become a valid child node participating in the distributed task.

According to an aspect of the disclosure, a communication device is provided. The communication device includes a processor, a transceiver connected with the processor, a memory configured to store executable instructions for the processor. The processor is configured to load and execute the executable instructions to perform the method for node determination for a distributed task as described in the above aspects.

According to an aspect of the disclosure, a computer-readable storage medium is provided. The computer-readable storage medium stores executable instructions. The executable instructions are loaded and executed by a processor to perform the method for node determination for a distributed task as described in the above aspects.

According to an aspect of the disclosure, a computer program product or a computer program is provided. The computer program product or the computer program includes computer instructions. The computer instructions are stored in a computer-readable storage medium. A processor of a computer device reads the computer instructions from the computer-readable storage medium and executes the computer instructions, to cause the computer device to perform the method for node determination for a distributed task described in the above aspects.

According to an aspect of the disclosure, a chip is provided. The chip includes a programmable logic circuit or a program. The chip is configured to perform the method for node determination for a distributed task as described in the above aspects.

The technical solutions provided in implementations of the disclosure at least provide the following beneficial effects.

The master node transmits the capability requirement for participating in the distributed task to the child node, the child node reports the second information to the master node based on the first information and the capability information of the child node, and the master node determines a set of valid child nodes participating in the distributed task based on the second information of multiple child nodes. In this way, according to the requirement of the distributed task, the master node can select from multiple nodes that can participate in the distributed task a best or better set of nodes for training and inference of distributed neural networks, thereby improving the computational efficiency of the distributed task as a whole with multiple better child nodes.

Since the child node can report the second information only when the child node satisfies the capability requirement indicated by the first information, in a scenario where there are multiple child nodes, the master node only needs to select a node from child nodes that satisfy the capability requirement, thereby reducing the amount of data that the master node needs to process and accelerating the node selection process.

### BRIEF DESCRIPTION OF THE DRAWINGS

To describe technical solutions in implementations of the disclosure more clearly, the following briefly introduces the accompanying drawings required for describing the implementations. Apparently, the accompanying drawings in the following description illustrate some implementations of the disclosure. Those of ordinary skill in the art may also obtain other drawings based on these accompanying drawings without creative efforts.
FIG. 1 is a schematic diagram of a federated learning scenario provided in exemplary implementations of the disclosure.
FIG. 2 is a schematic diagram of a mobile communication system provided in exemplary implementations of the disclosure.
FIG. 3 is a flowchart of a method for node determination provided in exemplary implementations of the disclosure.
FIG. 4 is a flowchart of a method for node determination provided in exemplary implementations of the disclosure.
FIG. 5 is a flowchart of a method for node determination provided in exemplary implementations of the disclosure.
FIG. 6 is a flowchart of a method for node determination provided in exemplary implementations of the disclosure.
FIG. 7 is a block diagram of an apparatus for node determination provided in exemplary implementations of the disclosure.
FIG. 8 is a block diagram of an apparatus for node determination provided in exemplary implementations of the disclosure.
FIG. 9 is a block diagram of a communication device provided in exemplary implementations of the disclosure.

### DETAILED DESCRIPTION

In order to make purposes, technical solutions, and advantages of the disclosure clearer, implementations of the disclosure will be further described in detail below with reference to accompanying drawings.

Before introducing methods provided in implementations of the disclosure in detail, a brief introduction is made to relevant terms and implementation environments involved in implementations of the disclosure.

Distributed task: a task that involves participation of multiple nodes. The distributed task includes but is not limited to at least one of a distributed data collection task, a distributed data computing task, a distributed data storage task, a distributed stream data processing task, a distributed model training task, a distributed model inference task, a distributed machine learning, and a federated learning.

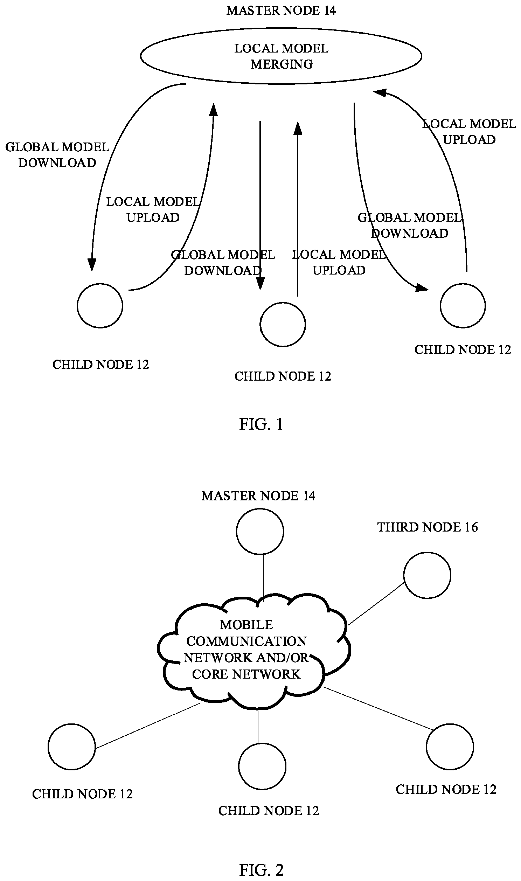

Federated learning: a typical distributed task scheme. As illustrated in FIG. 1, during the training process of federated learning, a training set is distributed on various child nodes 12. First, each child node 12 obtains a local neural network by training based on a local training set, and uploads the local neural network to a master node 14. The master node 14 obtains a global neural network by merging obtained local neural networks, and transmits the global neural network to each child node 12. Each child node 12 continues a next training iteration with the new global neural network. Finally, the training of the neural network is completed with the cooperation of multiple child nodes.

FIG. 2 illustrates a block diagram of a distributed task system provided in exemplary implementations of the disclosure. The system includes multiple child nodes 12, a master node 14, and a third node 16, where the third node 16 is an optional node.

The child node 12 is a node for participating in a distributed task. The child node 12 is user equipment (UE), an access network device, a core network element, or other network devices in a mobile communication system. For example, the access network device includes a base station, and the core network element includes a user plane function (UPF), a unified data management (UDM), a network exposure function (NEF), an access and mobility management function (AMF) entity, a session management function (SMF), and a policy control function (PCF).

The master node 14 is a node for task allocation, task distribution, and participation in the distributed task. The master node 14 is a UE, an access network device, a core network element, or other network devices in the mobile communication system. For example, the access network device includes a base station, and the core network element includes at least one of a UPF, a UDM, a NEF, an AMF entity, an SMF, and a PCF. The master node 14 may be an independent network node in the mobile communication system, a specific child node among child nodes 12 participating in the distributed task, or a control node participating in the distributed task.

The third node 16 is a node different from the child node 12 and the master node 14 in the mobile communication system.

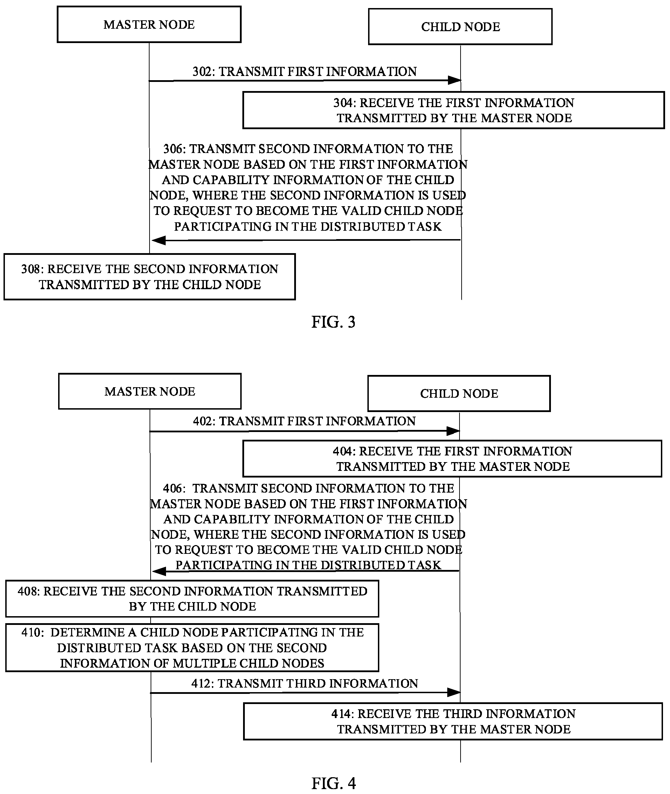

FIG. 3 illustrates a flowchart of a method for node determination for a distributed task provided in exemplary implementations of the disclosure. The method may be performed by a master node and a child node among multiple nodes in the mobile communication system. The method includes the following.

Step 302: the master node transmits first information to the child node in the mobile communication network.

The first information indicates a capability requirement for a node participating in the distributed task. Alternatively, the first information indicates a capability requirement that a node participating in the distributed task need to satisfy. Alternatively, the first information indicates a capability threshold that a node participating in the distributed task need to satisfy. The capability requirement is a requirement for a node capability. The node capability includes at least one of: a computing capability, a storage capability, a transmission capability, and an energy capability.

The first information at least includes capability information required for a valid child node participating in the distributed task.

Exemplarily, the capability information required for the valid child node participating in the distributed task includes at least one of the following.

Computing capability information satisfies a computing capability condition. The computing capability information indicates information related to a computing capability in the child node. The computing capability information represents a capability in terms of at least one of fixed-point computing, floating-point computing, and computing cache.

Storage capability information satisfies a storage capability condition. The storage capability information indicates information related to a storage capability in the child node. The storage capability information represents a capability in terms of at least one of available memory, available cache, and available storage.

Transmission capability information satisfies a transmission capability condition. The transmission capability information indicates information related to a data transmission capability in the child node. The transmission capability information represents a capability in terms of at least one of rate, delay, signal strength, bit error rate (BER), and block error rate (BLER).

Energy capability information satisfies the energy capability condition. The energy capability information indicates information related to a power capability in the child node. The energy capability information represents a capability in terms of at least one of remaining power, available power, and prediction of battery life.

Step 304: the child node receives the first information transmitted by the master node.

Step 306: the child node transmits second information to the master node based on the first information and capability information of the child node, where the second information is used to request to become the valid child node participating in the distributed task.

Exemplarily, the child node transmits the second information to the master node when the capability information of the child node satisfies the capability information required for the valid child node. The second information indicates that the capability information of the child node satisfies the capability information required for the valid child node and the child node requests to become the valid child node.

Exemplarily, when the capability information of the child node fails to satisfy the capability information required for the valid child node, the child node does not need to transmit feedback information to the master node, or transmits to the master node feedback information indicating that the capability requirement is not satisfied.

Step 308: the master node receives the second information transmitted by the child node.

The master node determines the valid child node participating in the distributed task from multiple child nodes based on the second information transmitted by the multiple child nodes, and adds the valid child node to a set of valid child nodes.

In conclusion, in the method provided in implementations, the master node transmits the capability requirement for participating in the distributed task to the child node, the child node reports the second information to the master node based on the first information and the capability information of the child node, and the master node determines the set of valid child nodes participating in the distributed task based on the second information of multiple child nodes. In this way, according to the requirement of the distributed task, the master node can select from multiple nodes that can participate in the distributed task a best or better set of nodes for training and inference of distributed neural networks, thereby improving the computational efficiency of the distributed task as a whole with multiple better child nodes.

Since the child node can report the second information only when the child node satisfies the capability requirement indicated by the first information, in a scenario where there are multiple child nodes, the master node only needs to select a node from child nodes that satisfy the capability requirement, thereby reducing the amount of data that the master node needs to process and accelerating the node selection process.

In implementations, the first information includes at least one of the following four types of information.

### (1) Computing capability information satisfies computing capability condition.

The computing capability information includes at least one of: a floating-point computing capability per unit time, a number (that is, quantity) of graphics processing units (GPU), a cache size of the GPU, a number of neural network processing units (NPU), a cache size of the NPU, and a number of central processing units (CPU).

In implementations, the computing capability information may be represented by one or more of: the floating-point computing capability per unit time, the number of GPUs, the cache size of the GPU, and the like. Since the computing capability information is represented in the form of data, the computing capability condition may also be represented in the form of data. When there are multiple types of computing capability information, the computing capability condition includes multiple corresponding conditions, and the computing capability information is in one-to-one correspondence with the computing capability condition.

In other implementations, the computing capability information may be represented by a computing capability level. Different computing capability levels represent different floating-point computing capabilities per unit of time, different numbers of GPUs, different cache sizes of the GPU, different numbers of GPUs and cache sizes of the GPU, different numbers of GPUs and cache sizes of the GPU, different processing capabilities of the NPU, different cache sizes, different number of processors, or a combination of one or more of the above.

For example, different cache sizes of the GPU may correspond to four different computing capability levels, as illustrated in Table 1.

**Table 1**

| computing capability level | cache size of GPU |
|---|---|
| 1 | 4G |
| 2 | 8G |
| 3 | 16G |
| 4 | 32G |

In implementations, the computing capability condition may also be represented by the computing capability level. For example, the computing capability level of a valid child node participating in the distributed task needs to be greater than or equal to 3.

For another example, different processor cache sizes and different numbers of processors may correspond to four different computing capability levels, as illustrated in Table 2.

**Table 2**

| computing capability level | processor cache size | number of processors |
|---|---|---|
| 1 | 4G | 1 |
| 2 | 4G | 2 |
| 2 | 8G | 1 |
| 3 | 8G | 2 |
| 3 | 16G | 1 |
| 4 | 16G | 2 |
| 4 | 32G | 1 |

In implementations, the computing capability condition may also be represented by the computing capability level. For example, the computing capability level of a valid child node participating in the distributed task needs to be greater than or equal to 2.

A correspondence between the computing capability level and one or more of the floating-point computing capability per unit time, the number of GPUs, the cache size of the GPU, or the processing capability of the NPU, the number of processors, the cache size, and the like is pre-agreed in protocols, or configured by the master node or the third node for the child node.

For example, the master node or the third node is a network device, and the child node is a UE. The network device transmits the correspondence to the UE via one or more of: a broadcast message, a system information block (SIB), a radio resource control (RRC) message, an RRC reconfiguration signaling, downlink control information (DCI), a medium access control-control element (MAC CE), a physical downlink control channel (PDCCH) order, data information, etc.

It can be understood that the SIB is a possible implementation of the broadcast message, and the RRC reconfiguration signaling is a possible implementation of the RRC message. That is, a first indication signaling includes at least one of: a broadcast message, an RRC message, a DCI, a MAC CE, a PDCCH order, and data information, the broadcast message includes an SIB, and the RRC message includes an RRC reconfiguration signaling.

### (2) Storage capability information satisfies a storage capability condition.

The storage capability information includes at least one of an available memory size, an available cache size, and an available storage size.

In some implementations, the storage capability information may be represented by one or more of the available memory size, the available cache size, and the available storage size. The "available" in the disclosure refers to "can be allocated to the distributed task". Since the storage capability information is represented in the form of data, the storage capability condition may also be represented in the form of data. When there are multiple types of storage capability information, the storage capability condition includes multiple corresponding conditions, and the storage capability information is in one-to-one correspondence with the storage capability condition.

In some implementations, the storage capability information may be represented by a storage capability level. Different storage capability levels represent different available memory sizes, different available cache sizes, or different available storage sizes.

For example, different memory sizes may correspond to four different storage capability levels, as illustrated in Table 3.

**Table 3**

| computing capability level | memory size |
|---|---|
| 1 | 128G |
| 2 | 256G |
| 3 | 512G |
| 4 | 1024G |

In implementations, the storage capability condition may also be represented by the storage capability level. For example, the storage capability level of a valid child node participating in the distributed task needs to be greater than or equal to 2.

A correspondence between the storage capability level and one or more of the memory size, the cache size, the storage size, and the like is pre-agreed in protocols, or configured by the master node or the third node for the child node.

For example, the master node or the third node is a network device, and the child node is a UE. The network device transmits the correspondence to the UE via one or more of: a broadcast, an SIB, an RRC message, a MAC CE, a PDCCH, a DCI, and the like.

### (3) Transmission capability information satisfies a transmission capability condition.

The transmission capability information includes at least one of: a transmission rate, a transmission delay, a communication signal strength, such as a reference signal received power (RSRP), a reference signal received quality (RSRQ), and a signal-to-interference-and-noise ratio (SINR), channel quality state information, a transmission BER, a transmission BLER, and spectral efficiency information.

The transmission capability information may be represented by one or more of the transmission rate, the transmission delay, the communication signal strength, the channel quality state information, the transmission BER, the transmission BLER, the spectrum efficiency information, and the like that can be supported. Since the transmission capability information is represented in the form of data, the transmission capability condition may also be represented in the form of data. When there are multiple types of transmission capability information, the transmission capability condition includes multiple corresponding conditions, and the transmission capability information is in one-to-one correspondence with the transmission capability condition.

The transmission capability may be represented by a transmission capability level. Different transmission capability levels represent different transmission rates, different transmission delays, different communication signal strengths, different channel quality state information, different transmission BERs, different transmission BLERs, or different spectral efficiencies. In implementations, the transmission capability condition may also be represented by the transmission capability level. For example, the transmission capability level of a valid child node participating in the distributed task needs to be greater than or equal to 2.

A correspondence between the transmission capability level and one or more of the transmission rate, the transmission delay, the communication signal strength, the channel quality state information, the transmission BER, the transmission BLER, the spectrum efficiency information, and the like is pre-agreed in protocols, or configured by the master node or the third node for the child node.

For example, the master node or the third node is a network device, and the child node is a UE. The network device transmits the correspondence to the UE via one or more of: a broadcast, an SIB, an RRC message, a MAC CE, a PDCCH, a DCI, and the like.

### (4) Energy capability information satisfies an energy level condition.

The energy capability information includes at least one of: remaining power, available power for the distributed task, and a predicted value of battery life.

In implementations, the energy capability information may be represented by one or more of: the remaining power of the child node, the available power of the child node for the distributed task, the predicted value of battery life, and the like. Since the energy capability information is represented in the form of data, the energy capability condition may also be represented in the form of data. When there are multiple types of energy capability information, the energy capability condition includes multiple corresponding conditions, and the energy capability information is in one-to-one correspondence with the energy capability condition.

In other implementations, the energy capability may be represented by an energy capability level. Different energy capability levels represent different remaining power, different available power information for the distributed task, or different predicted values of battery life.

A correspondence between the energy capability level and the power information is pre-agreed in protocols, or configured by the master node or the third node for the child node.

For example, the master node or the third node is a network device, and the child node is a UE. The network device transmits the correspondence to the UE via one or more of: a broadcast, an SIB, an RRC message, a MAC CE, a PDCCH, a DCI, and the like.

FIG. 4 illustrates a flowchart of a method for node determination provided in exemplary implementations of the disclosure. The method may be performed by a master node and a child node among multiple nodes in the mobile communication system. The method includes the following.

Step 402: the master node transmits first information to the child node in the mobile communication network.

The first information indicates a capability requirement for a node participating in the distributed task. Alternatively, the first information indicates a capability requirement that a node participating in the distributed task need to satisfy. Alternatively, the first information indicates a capability threshold that a node participating in the distributed task need to satisfy. The capability requirement is a requirement for a node capability. The node capability includes at least one of: a computing capability, a storage capability, a transmission capability, and an energy capability.

The first information at least includes capability information required for a valid child node participating in the distributed task.

Exemplarily, the capability information required for the valid child node participating in the distributed task includes at least one of the following.

Computing capability information satisfies a computing capability condition. The computing capability information indicates information related to a computing capability in the child node. The computing capability information represents a capability in terms of at least one of fixed-point computing, floating-point computing, and computing cache.

Storage capability information satisfies a storage capability condition. The storage capability information indicates information related to a storage capability in the child node. The storage capability information represents a capability in terms of at least one of available memory, available cache, and available storage.

Transmission capability information satisfies a transmission capability condition. The transmission capability information indicates information related to a data transmission capability in the child node. The transmission capability information represents a capability in terms of at least one of rate, delay, signal strength, BER, and BLER.

Energy capability information satisfies the energy capability condition. The energy capability information indicates information related to a power capability in the child node. The energy capability information represents a capability in terms of at least one of remaining power, available power, and prediction of battery life.

Exemplarily, when the child node is a UE and the master node is an access network device, the first information is carried in at least one of: system information, an SIB, an RRC message, a MAC CE, a DCI, information carried in a PDCCH, and information carried in a physical downlink shared channel (PDSCH). When the child node is an access network device and the master node is a UE, the first information is carried in at least one of: an RRC message, uplink control information (UCI), information carried in a physical uplink control channel (PUCCH), and information carried in a physical uplink shared channel (PUSCH).

In implementations, there is at least one type of first information represented by data, and the master node transmits the first information in the form of data to the child node. In other implementations, there is at least one type of first information represented by a capability level, and the master node transmits the first information in the form of capability level to the child node.

In implementations, the master node and the child node are both terminal devices, and the master node transmits the first information to the child node in the mobile communication network through a sidelink (SL).

In implementations, the master node is a first network device, the child node is a second network device, and the master node transmits the first information to the child node in the mobile communication network via a Xn interface, where the Xn interface is a communication interface between the first network device and the second network device.

Step 404: the child node receives the first information transmitted by the master node.

Exemplarily, when the child node is a UE and the master node is an access network device, the first information is carried in at least one of: system information, an SIB, an RRC message, a MAC CE, a DCI, information carried in a PDCCH, and information carried in a PDSCH. When the child node is an access network device and the master node is a UE, the first information is carried in at least one of an RRC message, a UCI, information carried in a PUCCH, and information carried in a PUSCH.

In implementations, the master node and the child node are both terminal devices, and the child node receives the first information transmitted by the master node through an SL.

In implementations, the master node is a first network device, the child node is a second network device, and the child node receives the first information transmitted by the master node via a Xn interface, where the Xn interface is a communication interface between the first network device and the second network device.

Step 406: the child node transmits second information to the master node based on the first information and capability information of the child node, where the second information is used to request to become the valid child node participating in the distributed task.

Exemplarily, the child node transmits the second information to the master node when the capability information of the child node satisfies the capability information required for the valid child node. The second information indicates that the capability information of the child node satisfies the capability information required for the valid child node and the child node requests to become the valid child node.

Exemplarily, when the capability information of the child node fails to satisfy the capability information required for the valid child node, the child node does not need to transmit feedback information to the master node, or transmits to the master node feedback information indicating that the capability requirement is not satisfied.

Exemplarily, when the child node is a UE and the master node is an access network device, the second information is carried in at least one of an RRC message, a UCI, information carried in a PUCCH, and information carried in a PUSCH. When the child node is an access network device and the master node is a UE, the second information is carried in at least one of: system information, an SIB, an RRC message, a MAC CE, a DCI, information carried in a PDCCH, information carried in a PDSCH.

In implementations, the master node and the child node are both terminal devices, and the child node transmits the second information to the master node through an SL.

In implementations, the master node is a first network device, the child node is a second network device, and the child node transmits the second information to the master node via a Xn interface, where the Xn interface is a communication interface between the first network device and the second network device.

Step 408: the master node receives the second information transmitted by the child node.

Exemplarily, when the child node is a UE and the master node is an access network device, the second information is carried in at least one of an RRC message, a UCI, information carried in a PUCCH, and information carried in a PUSCH. When the child node is an access network device and the master node is a UE, the second information is carried in at least one of: system information, an SIB, an RRC message, a MAC CE, a DCI, information carried in a PDCCH, information carried in a PDSCH.

In implementations, the master node and the child node are both terminal devices, and the master node receives the second information transmitted by the child node through an SL.

In implementations, the master node is a first network device, the child node is a second network device, and the master node receives the second information transmitted by the child node via a Xn interface, where the Xn interface is a communication interface between the first network device and the second network device.

Step 410: the master node determines a child node participating in the distributed task based on the second information of multiple child nodes.

In implementations, the master node determines a child node transmitting the second information as the child node participating in the distributed task.

In implementations, the master node determines N child nodes with strongest capabilities among child nodes transmitting the second information as the child node participating in the distributed task, where N is the number of child nodes required for the distributed task.

In implementations, the master node determines M child nodes with highest feedback speeds among the child nodes transmitting the second information as the child node participating in the distributed task, where M is the number of child nodes required for the distributed task.

In implementations, the master node determines K child nodes randomly selected among the child nodes transmitting the second information as the child node participating in the distributed task, where K is the number of child nodes required for the distributed task.

N, M, and K are positive integers.

Step 412: the master node transmits third information to the child node, where the third information indicates that the master node agrees for the child node to become the valid child node participating in the distributed task.

The master node transmits the third information to a child node belonging to a set of valid child nodes, and the third information indicates that the master node agrees for the child node to become the valid child node participating in the distributed task.

Exemplarily, when the child node is a UE and the master node is an access network device, the third information is carried in at least one of system information, an SIB, an RRC message, a MAC CE, a DCI, information carried in a PDCCH, and information carried in a PDSCH. When the child node is an access network device and the master node is a UE, the third information is carried in at least one of an RRC message, a UCI, information carried in a PUCCH, and information carried in a PUSCH.

In implementations, the master node and the child node are both terminal devices, and the master node transmits the third information to the child node in the mobile communication network through an SL.

In implementations, the master node is a first network device, the child node is a second network device, and the master node transmits the third information to the child node in the mobile communication network via a Xn interface, where the Xn interface is a communication interface between the first network device and the second network device.

Step 414: the child node receives the third information transmitted by the master node.

In the subsequent process, the master node transmits the distributed task to the valid child node, and the valid child node completes training and/or inference of the distributed task.

Optionally, the distributed task is a federated learning task.

Optionally, the distributed task is a machine learning task related to at least one of encoding, decoding, modulation, demodulation, transmission scheduling, transmission feedback, channel information feedback, and system broadcast in the mobile communication system.

In conclusion, in the method provided in implementations, the master node transmits the capability requirement for participating in the distributed task to the child node, the child node reports the second information to the master node based on the first information and the capability information of the child node, and the master node determines a set of valid child nodes participating in the distributed task based on the second information of multiple child nodes. In this way, according to the requirement of the distributed task, the master node can select from multiple nodes that can participate in the distributed task a best or better set of nodes for training and inference of distributed neural networks, thereby improving the computational efficiency of the distributed task as a whole with multiple better child nodes.

Since the child node can report the second information only when the child node satisfies the capability requirement indicated by the first information, in a scenario where there are multiple child nodes, the master node only needs to select a node from child nodes that satisfy the capability requirement, thereby reducing the amount of data that the master node needs to process and accelerating the node selection process.

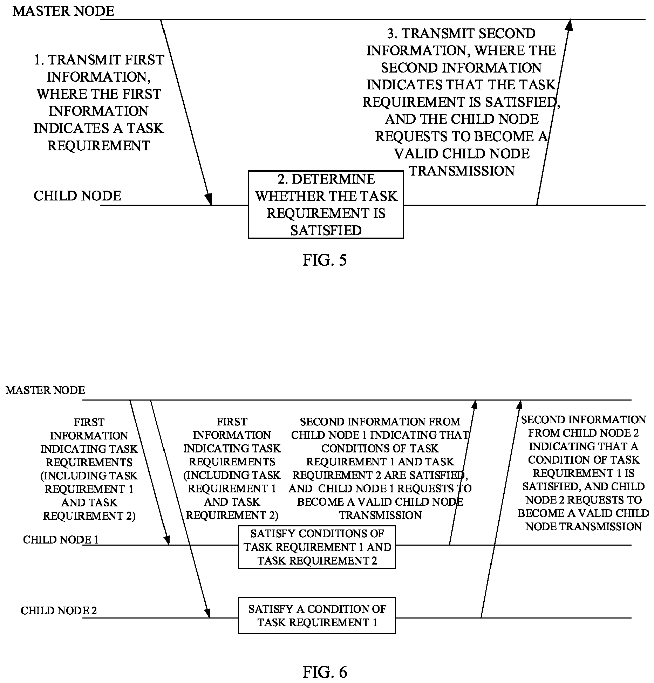

In exemplary examples, as illustrated in FIG. 5, the child node and master node involved in implementations may be a UE, a base station, a core network element, or other specific terminal devices or network devices, which are collectively referred to as the child node and the master node in implementations for ease of description.

The basic process of implementations is as follows.

### 1. The master node publishes a task requirement.

The master node transmits capability information required for a valid child node through the first message.

The capability information includes one or more of computing capability information, storage capability information, transmission capability information, and energy capability information.

The first message includes one or more of: the computing capability of the child node satisfying a first computing capability condition, the storage capability of the child node satisfying a first storage capability condition, the transmission capability of the child node satisfying a first transmission capability condition, and the energy capability of the child node satisfying a first energy capability condition.

The master node may be a master node, such as a network device, the child node may be a UE, and the network device transmits the first message to the UE via one or more of: a broadcast, an SIB, an RRC message, a MAC CE, a PDCCH, a DCI, and the like.

The master node may be a designated UE, and the child node may be another UE. The master node transmits the first message to the UE through an SL, for example, in one or more of a PSDCCH, a PSDSCH, and the like.

The master node may be a specific network device, and the child node may be a specific network device. The master node transmits the first message to the UE through an interface link between the network devices, for example, via a Xn interface.

A specific example is as follows.

The network device, which functions as the master node, notifies the UE (i.e., the child node) of the capability information required for a current valid child node via an RRC message, where the capability information includes the following. The computing capability of the UE is greater than a first computing capability threshold. For example, the floating-point computing capability of the UE is greater than A1 times per second, or the GPU cache of the UE is greater than 8GB. The storage capability of the UE is greater than a first storage capability threshold. For example, the memory size of the UE is greater than 16GB, or the cache of the UE is greater than 2GB. The transmission capability of the UE supports a transmission rate of 10 Mbps, the BLER or the BER of a current transmission of the UE is less than a given threshold, or the current SNR at the UE is greater than a given SNR threshold. The remaining power of the UE is greater than a given threshold or greater than a given proportion (for example, 50%) of the total power.

### 2. The child node requests to become a valid child node based on the resource situation of the child node.

The child node receives the first information, and can obtain the capability information of the valid child node required for the master node based on the content of the first information.

The child node determines whether to request to become a valid child node based on the resource situation of the child node.

If the capability of the child node fails to satisfy the requirement of the master node for the valid child node, the child node does not request to become a valid child node.

If the capability of the child node satisfies the requirement of the master node for the valid child node, the child node requests to become a valid child node.

The child node may request to become a valid child node as follows. The child node transmits a second message. The second message indicates that the child node requests to become a valid child node. Alternatively, the second message indicates that the child node satisfies a condition for becoming a valid child node and the child node requests to become a valid child node.

A specific example is as follows.

The UE, which functions as the child node, receives the first information. The UE obtains the capability information required for the valid child node based on the first information. For example, the UE determines that the capability information of the UE satisfies the capability information required for the valid child node as follows.

The computing capability of the UE satisfies a first computing capability condition, the storage capability of the UE satisfies a first storage capability condition, the transmission capability of the UE satisfies a first transmission capability condition, and the energy capability of the UE satisfies a first energy capability condition.

The UE transmits the second information via a UCI message or an RRC message, where the second information indicates that the UE satisfies the capability information required for the valid child node, and the UE requests to become a valid child node.

### 3. The master node determines a valid child node.

The master node receives the second information and determines a valid child node. For example, the master node may select all child nodes as the valid child node based on the received second information of multiple child nodes. For another example, the master node may select K child nodes with strongest capabilities as the valid child node based on the received second information of the multiple child nodes. For another example, the master node may select M child nodes with highest feedback speeds as the valid child node based on the received second information of the multiple child nodes. For another example, the master node may randomly select N child nodes as the valid child node based on the received second information of the multiple child nodes.

It should be noted that the master node can transmit multiple task requirements at the same time. When receiving the multiple task requirements, the child node can select a corresponding task requirement to respond according to the capability information of the child node. Then, the master node determines valid child nodes for different task requirements respectively according to feedbacks of the child nodes for different task requirements, as illustrated in FIG. 6.

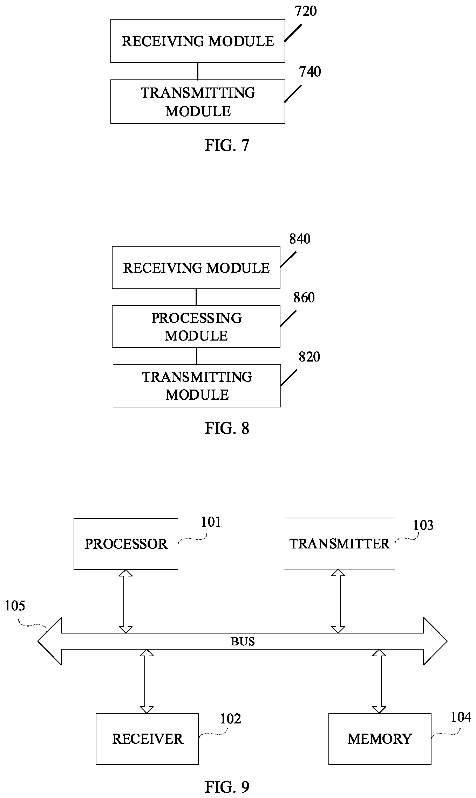

FIG. 7 illustrates a block diagram of an apparatus for determining a node participating in a distributed task provided in exemplary implementations of the disclosure. The apparatus includes a receiving module 720 and a transmitting module 740. The receiving module 720 is configured to receive first information transmitted by a master node, where the first information indicates a capability requirement for a valid child node participating in the distributed task. The transmitting module 740 is configured to transmit second information to the master node based on the first information and capability information of the child node, where the second information is used to request to become the valid child node participating in the distributed task.

In an optional design of implementations, the first information includes capability information required for the valid child node participating in the distributed task.

In an optional design of implementations, the capability information required for the valid child node participating in the distributed task includes at least one of: computing capability information satisfying a computing capability condition; storage capability information satisfying a storage capability condition; transmission capability information satisfying a transmission capability condition; and energy capability information satisfying an energy capability condition.

In an optional design of implementations, the computing capability information includes at least one of: a floating-point computing capability per unit time, a number of GPUs, a cache size of the GPU, a number of NPUs, a cache size of the NPU, and a number of CPUs.

In an optional design of implementations, the storage capability information includes at least one of: an available memory size, an available cache size, and an available storage size.

In an optional design of implementations, the transmission capability information includes at least one of: a transmission rate, a transmission delay, a communication signal strength, channel quality state information, a transmission BER, a transmission BLER, and spectral efficiency information.

In an optional design of implementations, the energy capability information includes at least one of: remaining power, available power for the distributed task, and a predicted value of battery life.

In an optional design of implementations, the master node is a network device, the child node is a terminal device, and the first information is carried in at least one of: a broadcast message, an SIB, an RRC message, an RRC reconfiguration signaling, a DCI, a MAC CE, a PDCCH order, and data information.

In an optional design of implementations, the master node and the child node are both terminal devices, and the receiving module 720 is configured to receive the first information transmitted by the master node through an SL.

In an optional design of implementations, the master node is a first network device, the child node is a second network device, and the receiving module 720 is configured to receive the first information transmitted by the master node via a Xn interface, where the Xn interface is a communication interface between the first network device and the second network device.

In an optional design of implementations, the second information indicates that the capability information of the child node satisfies capability information required for the valid child node and the child node requests to become the valid child node.

In an optional design of implementations, the second information is carried in at least one of: an RRC message, a UCI, information carried in a PUCCH, and information carried in a PUSCH.

In an optional design of implementations, the receiving module 720 is configured to receive third information transmitted by the master node, where the third information indicates that the master node agrees for the apparatus to become the valid child node participating in the distributed task.

In an optional design of implementations, the third information is transmitted by the master node on condition that: the apparatus is a child node transmitting the second information; or the apparatus is one of N child nodes with strongest capabilities among child nodes transmitting the second information; or the apparatus is one of M child nodes with highest feedback speeds among the child nodes transmitting the second information; or the apparatus is one of K child nodes randomly selected among the child nodes transmitting the second information, where N, M, and K are positive integers.

FIG. 8 illustrates a block diagram of an apparatus for determining a node participating in a distributed task provided in exemplary implementations of the disclosure. The apparatus includes a transmitting module 820 and a receiving module 840. The transmitting module 820 is configured to transmit first information to a child node in the mobile communication network, where the first information indicates a capability requirement for a valid child node participating in the distributed task. The receiving module 840 is configured to receive second information transmitted by the child node, where the second information is used to request to become the valid child node participating in the distributed task.

In an optional design of implementations, the first information includes capability information required for the valid child node participating in the distributed task.

In an optional design of implementations, the capability information required for the valid child node participating in the distributed task includes at least one of: computing capability information satisfying a computing capability condition; storage capability information satisfying a storage capability condition; transmission capability information satisfying a transmission capability condition; and energy capability information satisfying an energy capability condition.

In an optional design of implementations, the computing capability information includes at least one of: a floating-point computing capability per unit time, a number of GPUs, a cache size of the GPU, a number of NPUs, a cache size of the NPU, and a number of CPUs.

In an optional design of implementations, the storage capability information includes at least one of: an available memory size, an available cache size, and an available storage size.

In an optional design of implementations, the transmission capability information includes at least one of: a transmission rate, a transmission delay, a communication signal strength, channel quality state information, a transmission BER, a transmission BLER, and spectrum efficiency information.

In an optional design of implementations, the energy capability information includes at least one of: remaining power, available power for the distributed task, and a predicted value of battery life.

In an optional design of implementations, the master node is a network device, the child node is a terminal device, and the first information is carried in at least one of: a broadcast message, an SIB, an RRC message, an RRC reconfiguration signaling, a DCI, a MAC CE, a PDCCH order, and data information.

In an optional design of implementations, the master node and the child node are both terminal devices, and the transmitting module 820 is configured to transmit the first information to the child node in the mobile communication network through an SL.

In an optional design of implementations, the master node is a first network device, the child node is a second network device, and the transmitting module 820 is configured to transmit the first information to the child node in the mobile communication network via a Xn interface, where the Xn interface is a communication interface between the first network device and the second network device.

In an optional design of implementations, the second information indicates that the capability information of the child node satisfies capability information required for the valid child node and the child node requests to become the valid child node.

In an optional design of implementations, the second information is carried in at least one of: an RRC message, a UCI, information carried in a PUCCH, and information carried in a PUSCH.

In an optional design of implementations, the processing module 860 is configured to determine a child node participating in the distributed task based on the second information of multiple child nodes. The transmitting module 820 is configured to transmit third information to the child node, where the third information indicates that the master node agrees for the child node to become the valid child node participating in the distributed task.

In an optional design of implementations, the processing module 860 is configured to determine a child node transmitting the second information as the child node participating in the distributed task; or determine N child nodes with strongest capabilities among child nodes transmitting the second information as the child node participating in the distributed task; or determine M child nodes with highest feedback speeds among the child nodes transmitting the second information as the child node participating in the distributed task; or determine K child nodes randomly selected among the child nodes transmitting the second information as the child node participating in the distributed task, where N, M, and K are positive integers.

The child node mentioned in above implementations may include various handheld devices, vehicle-mounted devices, wearable devices, computing devices with wireless communication functions, or other processing devices connected to a wireless modem, as well as UEs, mobile stations (MS), terminal devices, and the like in various forms. For the convenience of description, such devices mentioned above are collectively referred to as terminals.

The child node mentioned in above implementations may also be a base station. The base station is a device deployed in an access network to provide wireless communication functions for a terminal. The base station may include macro base stations, micro base stations, relay stations, access points, and the like in various forms. In systems adopting different radio access technologies, devices with base station functions may have different names. For example, in a long term evolution (LTE) system, such devices are referred to as eNodeB or eNB, in a new radio (NR) system, such devices are referred to as gNodeB or gNB. The description "base station" may change with evolution of communications technologies. For the convenience of implementations of the disclosure, devices that provide wireless communication functions for terminals are collectively referred to as network devices.

FIG. 9 illustrates a schematic structural diagram of a communication device (a terminal or a network device) provided in exemplary implementations of the disclosure. The communication device includes a processor 101, a receiver 102, a transmitter 103, a memory 104, and a bus 105.

The processor 101 includes one or more processing cores. The processor 101 performs various functional applications and information processing by running software programs and modules.

The receiver 102 and the transmitter 103 may be implemented as a communication component which may be a communication chip.

The memory 104 is connected to the processor 101 via the bus 105.

The memory 104 may be configured to store at least one instruction, and the processor 101 is configured to execute the at least one instruction to implement various steps of the method for node determination mentioned in above method implementations.

The operations performed by the transmitting module in FIG. 7 or 8 may be performed by the transmitter 103 in implementations, the operations performed by the receiving module in FIG. 7 or 8 may be performed by the receiver 102 in implementations, the operations performed by a module other than the transmitting module and the receiving module in FIG. 7 or FIG. 8 may be performed by the processor 101 in implementations.

In addition, the memory 104 may be implemented by any type of volatile or non-volatile storage devices or combinations thereof. The volatile or non-volatile storage devices include, but are not limited to: a magnetic disk or an optical disk, an electrically-erasable programmable read only memory (EEPROM), an erasable programmable read only memory (EPROM), a static random access memory (SRAM), a read-only memory (ROM), a magnetic memory, a flash memory, and a programmable read-only memory (PROM).

In exemplary implementations, a computer-readable storage medium is further provided. The computer-readable storage medium stores at least one instruction, at least one program, a code set, or an instruction set. The at least one instruction, the at least one program, the code set, or the instruction set is loaded and executed by the processor to perform the method for node determination for the distributed task performed by the communication device provided in above method implementations.

In exemplary implementations, a computer program product or a computer program is further provided. The computer program product or the computer program includes computer instructions. The computer instructions are stored in a computer-readable storage medium. A processor of the communication device reads the computer instructions from the computer-readable storage medium and executes the computer instructions to cause the communication device to perform the method for node determination for the distributed task described in above aspects.

Those of ordinary skill in the art can understand that all or part of the steps for implementing above implementations may be completed by hardware or by instructing related hardware via a program. The program can be stored in a computer-readable storage medium. The storage medium may be a ROM, a magnetic disk, an optical disk, or the like.

The above are only optional implementations of the disclosure, which are not intended to limit the disclosure. Any modification, equivalent substitution, improvement, etc., made within the spirit and principles of the disclosure shall fall within the protection scope of the disclosure.

## Claims

1. A method for node determination for a distributed task, being applied to a child node among a plurality of nodes in a mobile communication network and comprising:
receiving, by the child node, first information transmitted by a master node, the first information indicating a capability requirement for a valid child node participating in the distributed task; and
transmitting, by the child node, second information to the master node based on the first information and capability information of the child node, the second information being used to request to become the valid child node participating in the distributed task.

2. The method of claim 1, wherein the first information comprises:
capability information required for the valid child node participating in the distributed task.

3. The method of claim 2, wherein the capability information required for the valid child node participating in the distributed task comprises at least one of:
computing capability information satisfying a computing capability condition;
storage capability information satisfying a storage capability condition;
transmission capability information satisfying a transmission capability condition; and
energy capability information satisfying an energy capability condition.

4. The method of claim 3, wherein the computing capability information comprises at least one of:
a floating-point computing capability per unit time;
a number of graphics processing units (GPU);
a cache size of the GPU;
a number of neural network processing units (NPU);
a cache size of the NPU; and
a number of central processing units (CPU).

5. The method of claim 2, wherein the storage capability information comprises at least one of:
an available memory size;
an available cache size; and
an available storage size.

6. The method of claim 2, wherein the transmission capability information comprises at least one of:
a transmission rate;
a transmission delay;
a communication signal strength;
channel quality state information;
a transmission bit error rate (BER);
a transmission block error rate (BLER); and
spectrum efficiency information.

7. The method of claim 2, wherein the energy capability information comprises at least one of:
remaining power;
available power for the distributed task; and
a predicted value of battery life.

8. The method of any of claims 1 to 7, wherein the master node is a network device, the child node is a terminal device, and the first information is carried in at least one of:
a broadcast message, a system information block (SIB), a radio resource control (RRC) message, an RRC reconfiguration signaling, downlink control information (DCI), a medium access control-control element (MAC CE), a physical downlink control channel (PDCCH) order, and data information.

9. The method of any of claims 1 to 7, wherein the master node and the child node are both terminal devices, and receiving, by the child node, the first information transmitted by the master node comprises:
receiving, by the child node, the first information transmitted by the master node through a sidelink (SL).

10. The method of any of claims 1 to 7, wherein the master node is a first network device, the child node is a second network device, and receiving, by the child node, the first information transmitted by the master node comprises:
receiving, by the child node, the first information transmitted by the master node via a Xn interface, wherein the Xn interface is a communication interface between the first network device and the second network device.

11. The method of any of claims 1 to 7, wherein the second information indicates that the capability information of the child node satisfies capability information required for the valid child node and the child node requests to become the valid child node.

12. The method of any of claims 1 to 7, wherein the second information is carried in at least one of:
an RRC message, uplink control information (UCI), information carried in a physical uplink control channel (PUCCH), and information carried in a physical uplink shared channel (PUSCH).

13. The method of any of claims 1 to 7, further comprising:
receiving, by the child node, third information transmitted by the master node, wherein the third information indicates that the master node agrees for the child node to become the valid child node participating in the distributed task.

14. The method of claim 13, wherein the third information is transmitted by the master node on condition that:
the child node is a child node transmitting the second information; or
the child node is one of N child nodes with strongest capabilities among child nodes transmitting the second information; or
the child node is one of M child nodes with highest feedback speeds among the child nodes transmitting the second information; or
the child node is one of K child nodes randomly selected among the child nodes transmitting the second information, wherein
N, M, and K are positive integers.

15. A method for node selection for a distributed task, being applied to a master node among a plurality of nodes in a mobile communication network and comprising:
transmitting, by the master node, first information to a child node in the mobile communication network, the first information indicating a capability requirement for a valid child node participating in the distributed task; and
receiving, by the master node, second information transmitted by the child node, the second information being used to request to become the valid child node participating in the distributed task.

16. The method of claim 15, wherein the first information comprises:
capability information required for the valid child node participating in the distributed task.

17. The method of claim 16, wherein the capability information required for the valid child node participating in the distributed task comprises at least one of:
computing capability information satisfying a computing capability condition;
storage capability information satisfying a storage capability condition;
transmission capability information satisfying a transmission capability condition; and
energy capability information satisfying an energy capability condition.

18. The method of claim 17, wherein the computing capability information comprises at least one of:
a floating-point computing capability per unit time;
a number of graphics processing units (GPU);
a cache size of the GPU;
a number of neural network processing units (NPU);
a cache size of the NPU; and
a number of central processing units (CPU).

19. The method of claim 17, wherein the storage capability information comprises at least one of:
an available memory size;
an available cache size; and
an available storage size.

20. The method of claim 17, wherein the transmission capability information comprises at least one of:
a transmission rate;
a transmission delay;
a communication signal strength;
channel quality state information;
a transmission bit error rate (BER);
a transmission block error rate (BLER); and
spectrum efficiency information.

21. The method of claim 17, wherein the energy capability information comprises at least one of:
remaining power;
available power for the distributed task; and
a predicted value of battery life.

22. The method of any of claims 15 to 21, wherein the master node is a network device, the child node is a terminal device, and the first information is carried in at least one of:
a broadcast message, a system information block (SIB), a radio resource control (RRC) message, an RRC reconfiguration signaling, downlink control information (DCI), a medium access control-control element (MAC CE), a physical downlink control channel (PDCCH) order, and data information.

23. The method of any of claims 15 to 21, wherein the master node and the child node are both terminal devices, and transmitting, by the master node, the first information to the child node in the mobile communication network comprises:
transmitting, by the master node, the first information to the child node in the mobile communication network through a sidelink (SL).

24. The method of any of claims 15 to 21, wherein the master node is a first network device, the child node is a second network device, and transmitting, by the master node, the first information to the child node in the mobile communication network comprises:
transmitting, by the master node, the first information to the child node in the mobile communication network via a Xn interface, wherein the Xn interface is a communication interface between the first network device and the second network device.

25. The method of any of claims 15 to 21, wherein the second information indicates that the capability information of the child node satisfies capability information required for the valid child node and the child node requests to become the valid child node.

26. The method of any of claims 15 to 21, wherein the second information is carried in at least one of:
an RRC message, uplink control information (UCI), information carried in a physical uplink control channel (PUCCH), and information carried in a physical uplink shared channel (PUSCH).

27. The method of any of claims 15 to 21, further comprising:
determining, by the master node, a child node participating in the distributed task based on the second information of a plurality of child nodes; and
transmitting, by the master node, third information to the child node, wherein the third information indicates that the master node agrees for the child node to become the valid child node participating in the distributed task.

28. The method of claim 27, wherein determining the child node participating in the distributed task based on the second information of the plurality of child nodes comprises:
determining a child node transmitting the second information as the child node participating in the distributed task; or
determining N child nodes with strongest capabilities among child nodes transmitting the second information as the child node participating in the distributed task; or
determining, M child nodes with highest feedback speeds among the child nodes transmitting the second information as the child node participating in the distributed task; or
determining K child nodes randomly selected among the child nodes transmitting the second information as the child node participating in the distributed task, wherein
N, M, and K are positive integers.

29. An apparatus for node determination for a distributed task, comprising:
a receiving module configured to receive first information transmitted by a master node, the first information indicating a capability requirement for a valid child node participating in the distributed task; and
a transmitting module configured to transmit second information to the master node based on the first information and capability information of the child node, the second information being used to request to become the valid child node participating in the distributed task.

30. An apparatus for node determination for a distributed task, comprising:
a transmitting module configured to transmit first information to a child node in a mobile communication network, the first information indicating a capability requirement for a valid child node participating in the distributed task; and
a receiving module configured to receive second information transmitted by the child node, the second information being used to request to become the valid child node participating in the distributed task.

31. A communication device, comprising:
a processor;
a transceiver connected with the processor; and
a memory configured to store executable instructions for the processor, wherein the processor is configured to load and execute the executable instructions to perform the method of any of claims 1 to 28.

32. A computer-readable storage medium storing executable instructions, the executable instructions being loaded and executed by a processor to perform the method of any of claims 1 to 28.
